# EUROPEAN PATENT APPLICATION

(11) **EP 2 685 734 A2**
(43) Date of publication of application: **15.01.2014**
(21) Application number: 13174722.2
(22) Date of filing: 02.07.2013
(51) Int. Cl.: H04N 13/04

(54) **Image display apparatus, method for displaying image and glasses apparatus**

(30) Priority: 10.07.2012 KR 20120075202
(71) Applicant: Samsung Electronics Co., Ltd, Gyeonggi-do 443-742 (KR)
(72) Inventor: Park, Jae-sung, Seoul (KR); Song, Myoung-jong, Gyeonggi-do (KR)
(74) Representative: Brandon, Paul Laurence

(57) **Abstract**

An image display apparatus is provided. The image display apparatus includes a signal processor which composes image frames of two-dimensional (2D) content or image frames three-dimensional (3D) content; an output unit which displays an image, wherein the output unit operates in a first mode to output the 2D content so that the image frames of the 2D content composed by the signal processor are displayed and operates a second mode to output the 3D content so that the image frame of the 3D content composed by the signal processor is displayed; an interface unit which receives a mode conversion command; and a controller which controls the output unit to convert between operating in the first mode and the second mode in accordance with the mode conversion command received through the interface unit.

## Description

### CROSS-REFERENCE TO RELATED APPLICATION

This application claims priority from Korean Patent Application No. 10-2012-0075202, filed in the Korean Intellectual Property Office on July 10, 2012, the disclosure of which is incorporated herein by reference.

### BACKGROUND

### 1. Field of the Invention

Apparatuses and methods consistent with exemplary embodiments relate to an image display apparatus, a method for displaying an image, and a glasses apparatus, and more particularly, to an image display apparatus through which a two-dimensional (2D) image and a three-dimensional (3D) image may be displayed and viewed, a method for displaying an image and a glasses apparatus.

### 2. Description of the Related Art

With the development of digital technology, various types of electronic products have been developed and provided. In particular, various display apparatuses such as a television, a mobile phone, a personal computer (PC), a notebook PC, and a personal digital assistant (PDA) have been widely used in household.

As such display apparatuses have been widely used, user needs for various functions have also increased. Accordingly, manufacturers have made an effect to meet such user needs by providing products with new functions.

In particular, there are increasing needs for technology which allows a user to watch desired contents using a single display apparatus. In addition, a 3D image display technology which provides a user with stereoscopic sense more vividly has been emerged.

However, a display apparatus which allows a user to watch 2D and 3D images alternately or allows a plurality of users to watch a plurality of 2D images or 3D images has not been developed yet. On the premise that such a display apparatus will be developed, a method for changing contents conveniently and effectively just as changing channels in a television without interfering other users is required.

### SUMMARY

Exemplary embodiments provide an apparatus and a method for processing an image which allow a stereoscopic image to be recognized by a left eye and a right eye accurately and an apparatus and a method for displaying using the same.

According to an aspect of an exemplary embodiment, there is provided an image display apparatus including a signal processor which composes image frames of two-dimensional (2D) content or image frames three-dimensional (3D) content; an output unit which displays an image, wherein the output unit operates in a first mode to output the 2D content so that the image frames of the 2D content composed by the signal processor are displayed and operates a second mode to output the 3D content so that the image frames of the 3D content composed by the signal processor are displayed; an interface unit which receives a mode conversion command; and a controller which controls the output unit to convert between operating in the first mode and the second mode in accordance with the mode conversion command received through the interface unit.

The first mode may be one of a 2D single-view mode in which image frames of one 2D content are output sequentially and a 2D multi-view mode in which image frames of a plurality of 2D contents are output alternately.

The second mode may be one of a 3D single-view mode in which a left-eye image frame and a right-eye image frame of one 3D content are output alternately and a 3D multi-view mode in which a left-eye image frame and a right-eye image frame of each of a plurality of 3D contents at output alternately.

The controller may control to output an OSD menu for mode conversion along with a reduced screen of the first mode and a reduced screen of the second mode, and the mode conversion command may be an input to select another mode on the menu which is different from the current mode.

If the mode conversion command is received through the interface unit, the controller may control to output a message asking whether to accept mode conversion, and if a mode conversion acceptance message is received through the interface unit, may control to convert a mode and perform outputting.

If the mode conversion command is received from a remote controller, the controller may control not to output a message asking whether to accept the mode conversion, and control to convert a mode and perform outputting.

If the mode conversion is performed and a plurality of contents are received, the controller may control to output a menu to select one of the plurality of contents and transmit a sync signal corresponding to a content selected from a menu to a glasses apparatus which transmits the mode conversion command.

If a viewing environment setting command is received through the interface unit, the controller may control to output a message asking whether to accept a viewing environment setting, and if a viewing environment setting acceptance message is received through the interface unit, the controller may control to output an image frame of the 2D content or the 3D content by setting a viewing environment in accordance with the viewing environment setting command.

If the viewing environment setting command is received from a remote controller, the controller may control not to output a message asking whether to accept the viewing environment setting and control to set a viewing environment and perform outputting

The viewing environment may be at least one of a depth, a brightness, a contrast, a resolution, and a master volume.

According to an aspect of another exemplary embodiment, there is provided a method for displaying an image, the method including composing image frames of two-dimensional (2D) content or three-dimensional (3D) content; outputting the 2D content in a first mode in which the image frames of the 2D content are displayed or the 3D content in a second mode in which the image frames of the 3D content are displayed; receiving a command to operate in one of the first mode and the second mode; and converting between outputting the image frames of the 2D content in the first mode and outputting the image frames of the 3D content in the second mode in accordance with the received mode conversion command.

The first mode may be one of a 2D single-view mode in which image frames of one 2D content are output sequentially and a 2D multi-view mode in which image frames of a plurality of 2D contents are output alternately.

The second mode may be one of a 3D single-view mode in which a left-eye image frame and a right-eye image frame of one 3D content are output alternately and a 3D multi-view mode in which a left-eye image frame and a right-eye image frame of each of a plurality of 3D contents at output alternately.

The method may further include, if the mode conversion command is received, outputting a message asking whether to accept mode conversion, and the converting a mode and performing outputting may include, if a mode conversion acceptance message is received, converting a mode and performing outputting.

If the mode conversion command is received from a remote controller, a message asking whether to accept the mode conversion may not be displayed and a mode may be converted before outputting.

The method may further include, if the mode conversion is performed and a plurality of contents are received, outputting a menu to select one of the plurality of contents and transmitting a sync signal corresponding to a content selected from a menu to a glasses apparatus which transmits the mode conversion command.

The method may further include, if a viewing environment setting command is received, outputting a message asking whether to accept a viewing environment setting, and if a viewing environment setting acceptance message is received, outputting an image frame of the 2D content or the 3D content by setting a viewing environment in accordance with the viewing environment setting command.

If the viewing environment setting command is received from a remote controller, a message asking whether to accept the viewing environment setting may not be output, and the viewing environment may be set in accordance with the viewing environment setting command before outputting an image frame of the 2D content or the 3D content.

The viewing environment may be at least one of a depth, a brightness, a contrast, a resolution, and a master volume.

According to an aspect of another exemplary embodiment, there is provided a glasses apparatus which is paired with an image display apparatus so as to view 2D content or 3D content, the glasses apparatus including a communication interface unit which is configured to communicate with an image display apparatus, a first shutter glasses unit, a second shutter glasses unit, an input unit which receives a mode conversion command to operate the image display apparatus in one of a first mode in which image frames of the 2D content are displayed or in a second mode in which image frames of the 3D content are displayed, and a controller which opens or closes the first shutter glasses unit and the second shutter glasses unit in accordance with a display timing of the first mode or a display timing of the second mode, and if the mode conversion command is received through the input unit, controls the communication interface unit to transmit the mode conversion command to the image display apparatus.

According to various exemplary embodiments, a display apparatus which allows a plurality of people to watch a plurality of 2D or 3D contents is provided, and users may contents conveniently and effectively just as changing channels in a television without interfering other users.

### BRIEF DESCRIPTION OF THE DRAWINGS

The above and/or other aspects will be more apparent by describing certain exemplary embodiments with reference to the accompanying drawings, in which:

FIGS. 1 to 3 are concept views illustrating configuration of a content providing system according to an exemplary embodiment;

FIGS. 4 and 5 are views provided to explain a sync signal transmission method according to various exemplary embodiments;

FIG. 6 is a block diagram illustrating configuration of an image display apparatus according to the above exemplary embodiment;

FIGS. 7 and 8 are block diagrams illustrating detailed configuration according to an exemplary embodiment;

FIG. 9 is a reference view illustrating a display screen in which a mode conversion command is transmitted according to an exemplary embodiment;

FIGS. 10 and 12 are reference views illustrating another exemplary embodiment to resolve problems;

FIG. 13 is a reference table indicating whether it is necessary to display a message for asking whether to accept mode conversion according to characteristics of a current mode and a converted mode;

FIGS. 14 and 15 are reference views illustrating an operation of an image display apparatus when a viewing environment setting command is received;

FIGS. 16 to 21 are flowcharts illustrating an image display method according to another exemplary embodiment;

FIG. 22 is a block diagram illustrating configuration of a glasses apparatus 200 according to various exemplary embodiments; and

FIGS. 23 and 24 are reference views illustrating an exemplary embodiment of the glasses apparatus 200 including various input units 240.

### DETAILED DESCRIPTION

Certain exemplary embodiments are described in detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

The configuration of an image display apparatus is described in detail below.

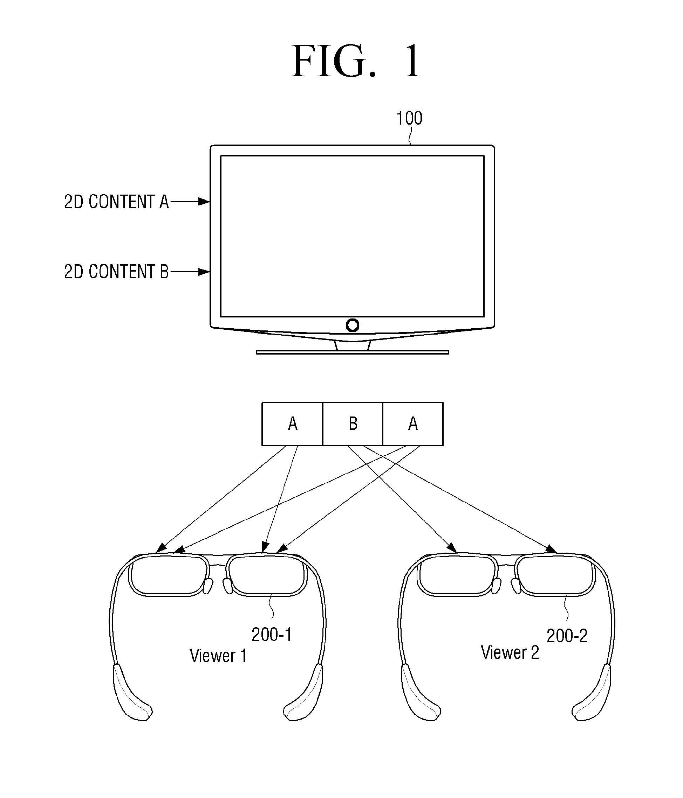

FIGS. 1 to 3 are concept views illustrating configuration of a content providing system according to an exemplary embodiment. As illustrated in FIGS. 1 to 3, the content providing system 1000 comprises an image display apparatus 100 and a glasses apparatus 200 (200-1, 200-2).

The image display apparatus 100 displays 2D or 3D contents depending on a display mode. The image display apparatus 100 may operate in a first mode in which image frames of 2D contents are displayed on a display or in a second mode in which image frames of 3D contents are displayed on a display. 3D contents refer to contents which give stereoscopic sense to users using a multi-view image which are represented from different perspectives. On the other hand, 2D contents refer to contents consisting of image frames represented from a single view point. 3D contents include depth information which represents the degree of stereoscopic sense.

Herein, the contents may be contents which are pre-produced contents such as Video On Demand (VoD) contents, premium VoD contents, broadcast contents, Internet contents, local files, external contents connected via DLNA network, but are not limited thereto. Such contents as recorded broadcast contents and real-time broadcast contents may be the contents.

The first mode may be one of a 2D single-view mode in which image frames of a single 2D content are output sequentially and a 2D multi-view mode in which image frames of a plurality of 2D contents are output alternately.

Herein, outputting image frames sequentially means displaying image frames constituting contents on a display sequentially at predetermined time intervals. For example, if there are image frames A, B, C, D, ... Z of 2D contents, A, B, C, D, ... Z are displayed at predetermined time intervals.

On the other hand, displaying image frames alternately means displaying an image frame of one content first and then displaying an image frame of another content so that image frames of different contents may be displayed alternately. For example, if image frames of one content is A, B, C, D, ..., Z, and image frames of another content is a, b, c, d, ..., z, image frames are displayed in the order of A, a, B, b, C, c, ..., Z, z.

Although not illustrated in the drawings, an image display apparatus in a 2D single-view mode may display image frames of one 2D content sequentially. In this case, 2D contents may be viewed without a glasses apparatus which will be explained later.

FIG. 1 illustrates an exemplary embodiment of a 2D multi-view mode in which a plurality of 2D contents are displayed alternately.

Referring to FIG. 1, the image display apparatus 100 displays a plurality of 2D contents (contents A, B) alternately, generates a sync signal for synchronizing glasses apparatuses 1, 2 (200-1, 200-2) with each content, and transmits the sync signal to the glasses apparatuses 1, 2 (200-1, 200-2).

In this case, the glasses apparatus 200-1 may open both left shutter glasses and right shutter glasses when a single content (A) is displayed in accordance with a sync signal, and may close both left shutter glasses and right shutter glasses when another content (B) is displayed. Accordingly, a viewer 1 wearing the glasses apparatus 200-1 may watch only one content (A) which is synchronized with the glasses apparatus 200-1 from among a plurality of contents A, B which are displayed alternately. Likewise, a viewer 2 wearing the glasses apparatus 200-2 may watch only the content (B). As image frames of different 2D contents are displayed at a fast speed and an after-image effect of the retina persists while the lenses are closed, a user may enjoy a natural image.

The second mode may be one of a 3D single-view mode in which left-eye image frames and right-eye image frames of a single 3D content are output sequentially and a 3D multi-view mode in which left-eye image frames and right-eye image frames of a plurality of 3D contents are output alternately.

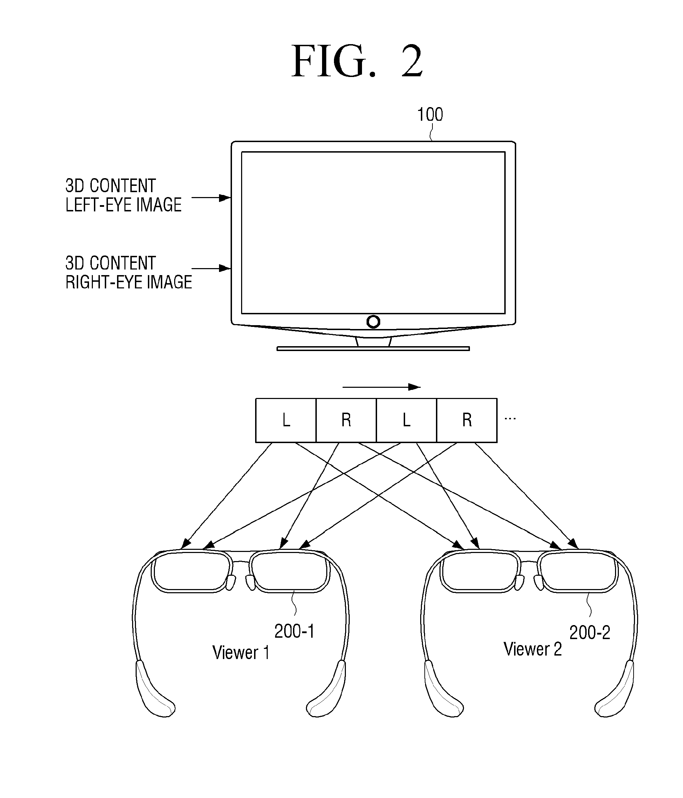

FIG. 2 is a view provided to explain a method for providing a single 3D content in the second mode according to another exemplary embodiment.

As illustrated in FIG. 2, a left-eye image frame (L) and a right-eye image frame (R) of a 3D content may be displayed alternately. In this case, displaying image frames alternately means displaying image frames alternately such that a left-eye image (L) of a single 3D content is displayed first and then, a right-eye image frame (R) is displayed.

In this case, the glasses apparatus 200-1 and the glasses apparatus 200-2 may open the left shutter glasses when a left-eye image frame of one 3D content is displayed in accordance with a sync signal and open the right shutter glasses when a right-eye image frame of the same 3D content is displayed. The right-eye image frame and the left-eye image frame has a predetermined time difference and image frames are displayed alternately at a fast speed while an after-image effect persists while the lenses are closed. Therefore, each user wearing the glasses apparatus 200-1 and the glasses apparatus 200-2 may watch a natural 3D image.

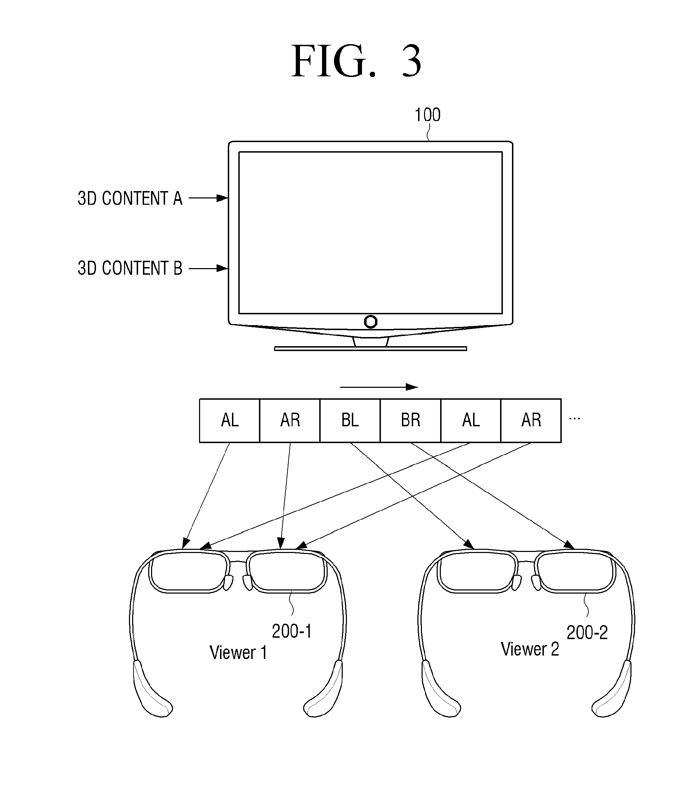

FIG. 3 is a view provided to explain a method for providing a plurality of 3D contents in the second mode according to an exemplary embodiment.

As illustrated in the drawing, if a plurality of 3D contents (contents A, B) are 3D contents, the image display apparatus 100 may display a plurality of 3D contents (content A, B) alternately while displaying left-eye image frames and right-eye image frames of each 3D content alternately. The operations of displaying image frames alternately have already been explained above.

For example, a left-eye image (AL) and a right-eye image (AR) of 3D content A may be displayed and left-eye image (BL) and right-eye image (BR) of 3D content B may be displayed alternately. In this case, the glasses apparatus 200-1 may open left-eye shutter glasses at a time when the left-eye image frame (AL) of 3D content A is displayed, and open right-eye shutter glasses at a time when the right-eye image frame (AR) is displayed, and the glasses apparatus 200-2 may open left-eye shutter glasses at a time when the left-eye image frame (BL) of 3D content B is displayed and open right eye shutter glasses at a time when the right-eye image frame (BL) of 3D content B is displayed.

Further, it is possible to display the left-eye image frame (AL) of 3D content A, the left-eye image frame (BL) of 3D content B, the right-eye image frame (AR) of 3D content A, and the right-eye image frame (BR) of 3D content B alternately. In this case, the time difference between the left-eye images of each content and the time difference between the right-eye images of each content are maintained constantly, a user may watch natural 3D contents.

As the viewer 1 wearing the glasses apparatus 200-1 watches only 3D content A and the viewer 2 wearing the glasses apparatus 200-2 watches only 3D content B, a plurality of users may watch different 3D contents using the single image display apparatus 100.

The image display apparatus 100 according to various exemplary embodiments may be various apparatuses having a display, such as a television, a mobile phone, a PDA, a notebook PC, a monitor, a tablet PC, an electronic book, an electronic album, a kiosk, flexible display, a Head Mounted Display (HMD), and so on.

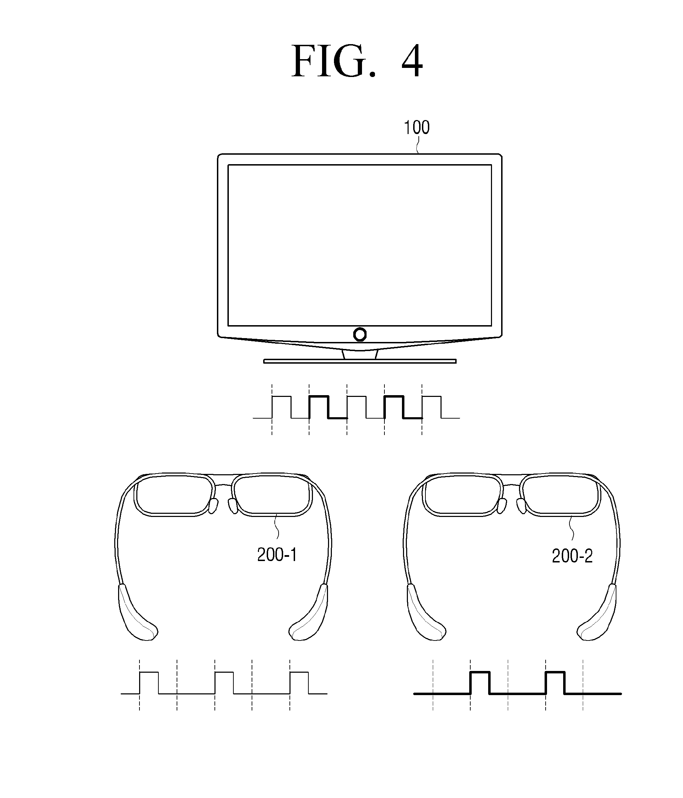

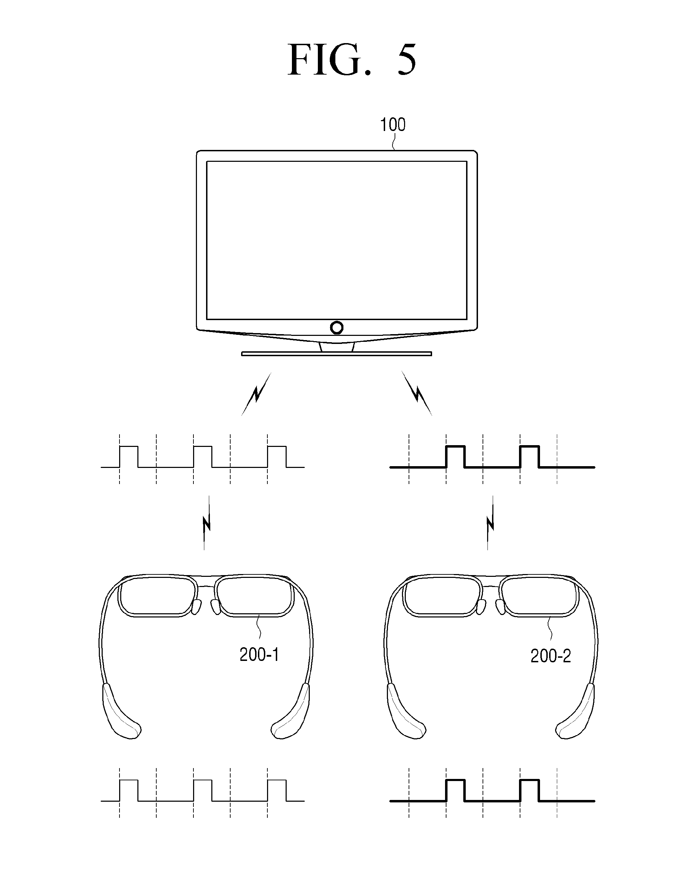

FIGS. 4 and 5 are views provided to explain a sync signal transmission method according to various exemplary embodiments.

According to FIG. 4, the image display apparatus 100 may broadcast or multicast a single signal which multiplexes a sync signal corresponding to the glasses apparatus 200-1 and the glasses apparatus 200-2, and each glasses apparatus 200-1 and 200-2 may open/close shutter glasses by being synchronized with a user command (for example, a channel conversion command) from among corresponding signals.

However, the above-exemplary embodiment is only an example. As illustrated in FIG. 5, the image display apparatus 100 may uni-cast a sync signal corresponding to the glasses apparatus 200-1 and the glasses apparatus 200-2 to the glasses apparatuses 200-1 and 200-2, respectively and the corresponding apparatuses 200-1 and 200-2 may receive the corresponding sync signal.

A sync signal may be realized in the form of Radio Frequency (RF) signal or Infrared (IR) signal, and this will be explained in detail.

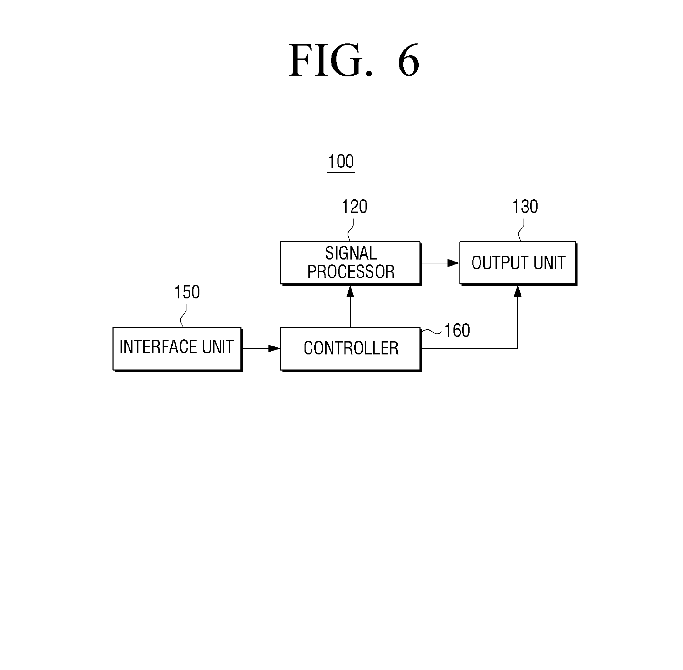

FIG. 6 is a block diagram illustrating configuration of an image display apparatus according to the above exemplary embodiment.

According to FIG. 6, the image display apparatus 100 comprises a signal processor 120, an output unit (i.e., a display or a display unit) 130, an interface unit 150, and a controller 160.

The signal processor 120 performs various signal-processing with respect to received contents including composing image frames of 2D contents or 3D contents. The operation of the signal processor 120 in each mode is as below.

In a 2D single-view mode, the signal processor 120 composes image frames of a single 2D content sequentially to comply with the display order.

In a multi-view mode, the signal processor 120 composes image frames of a plurality of 2D contents alternately.

In a 3D single-view mode, the signal processor 120 composes a left-eye image frame and a right-eye image of a single 3D content alternately.

In a 3D multi-view mode, the signal processor 120 composes a left-eye image frame and a right-eye image frame of one 3D content from among a plurality of 3D contents and a left-eye image frame and a right-eye image frame of another 3D content alternately.

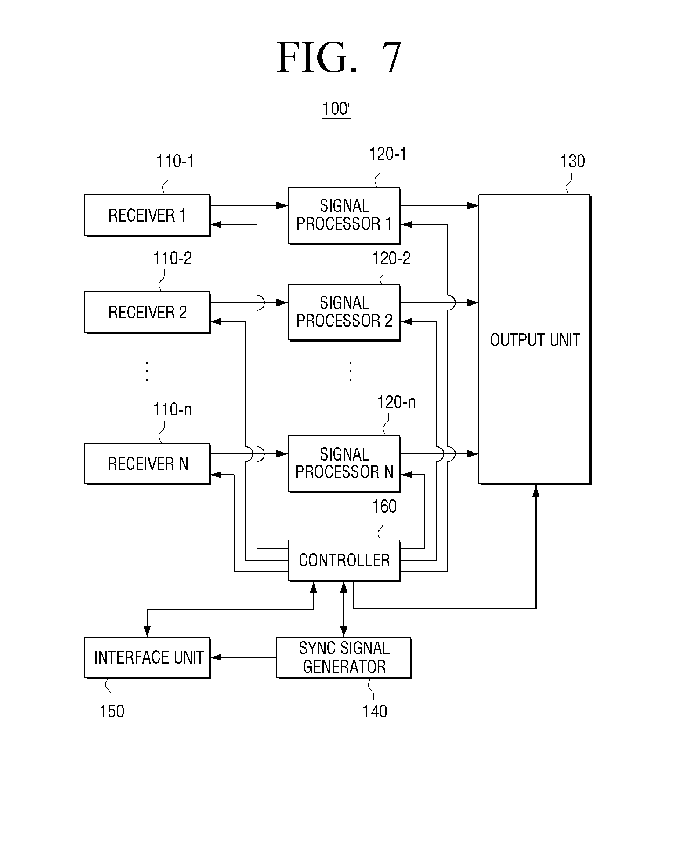

There may be a plurality of signal processors 120 as illustrated in FIG. 7 (120-1, 120-2, ..., 120-n) as illustrated in FIG. 7 which will be explained later. In this case, various signal processing may be performed with respect to contents which are received from a plurality of receiver (110-1, 110-2, ..., 110-n in FIG. 7). The plurality of signal processors (120-1, 120-2, ..., 120-n) processes each of the contents in the form of an image frame.

The output unit 130 outputs image frames of contents which are composed by the signal processor 120. Albeit not illustrated in the drawing, an image frame output from the signal processor 120 is multiplexed through a multiplexer and the output unit 130 disposes image frames of each content differently according to a set mode and outputs the image frames.

Specifically, the output unit 130 outputs image frames of a single 2D content sequentially in a 2D single-view mode, outputs image frames of a plurality of 2D contents alternately in a 2D multi-view mode, outputs a left-eye image frame and a right-eye image frame of a single 3D content alternately in a 3D single-view mode, and outputs a left-eye image frame and a right-eye image frame of each 3D content alternately in a 3D dual-view mode.

Herein, the output unit (display) 130 may be realized as at least one of a Liquid Crystal Display Panel, a Plasma Display Panel, an Organic Light Emitting Diode (OLED) display, a Vacuum Fluorescent Display (VFD), a Field Emission Display (FED) and an Electro Luminescence Display (ELD).

The interface unit 150 receives a user command. The user command includes various commands to control an image display apparatus. The user command may be generated and transmitted from a remote control apparatus (hereinafter, referred to as a remote controller) or the glasses apparatus 200.

In particular, a mode conversion command to perform an operation in either one of the first mode and the second mode may be received through the interface unit 150. The mode conversion command may be transmitted through a remote controller 300 or a glasses apparatus, which will be explained later. In addition, a sync signal may be transmitted to a glasses apparatus through the interface unit 150, but the method for receiving/transmitting information is not limited technically.

For example, the interface unit 150 may communication with a glasses apparatus by having an RF communication module. Herein, the RF communication module may be realized as a Bluetooth communication module. Accordingly, the interface unit 150 may generate a transmission stream according to Bluetooth communication standard to include a sync signal and transmit the generated transmission stream to the glasses apparatus.

That is, the transmission stream includes time information to open/close shutter glasses of a glasses apparatus by being synchronized with a display timing of each content. Specifically, the transmission stream may include information regarding an offset time to open left-eye shutter glasses, an offset time to close left-eye shutter glasses, an offset time to open right-eye shutter glasses, and an offset time to close right-eye shutter glasses of a glasses apparatus from a reference time set for each content. Herein, the reference time refers to a point of time at which a vertical sync signal occurs in image frames of each content, and time information regarding a time at which a vertical sync signal occurs may also be included in a transmission stream.

In an exemplary embodiment, in order to perform communication according to a Bluetooth communication method, the interface unit 150 performs pairing with each glasses apparatus. Once paring is completed, information regarding each glasses apparatus, such as apparatus identifier (ID)or address, may be registered in the interface unit 150. The interface unit 150 matches a display timing of each content with information regarding a glasses apparatus to generate a single transmission stream according to a Bluetooth communication standard. For example, the interface unit 150 may match each content with information regarding different glasses apparatuses according to a displacement order of image frames of contents. That is, if two contents are provided alternately in a multi-view mode (the second mode), image frames of contents which are disposed first, third, ..., nth may be matched with information regarding the first glasses apparatus, and image frames of contents which are disposed second, fourth, ..., n+1th may be matched with information regarding the second glasses apparatus (herein, n is an odd number). If a sync signal is received, the glasses apparatus may check a display timing corresponding to the glasses apparatus information and open or close shutter glasses in accordance with the checked display timing.

In the above exemplary embodiment, the interface unit 150 communicates with the glasses apparatus according to a Bluetooth communication method, but this is only an example. That is, the interface unit 150 may communicate with the glasses apparatus not only using a Bluetooth method but also using a communication method such as infrared communication and Zigbee, or may perform communication according to various wireless communication methods by forming a communication channel nearby in order to transmit/receive signals.

The interface unit 150 may provide an IR sync signal having different frequencies to a glasses apparatus. In this case, the glasses apparatus may receive a sync signal having a specific frequency and open or close shutter glasses in accordance with a display timing of the corresponding contents.

In this case, the interface unit 150 may transmit an infrared signal in which the first period of high level and the second period of low level are repeated at predetermined time intervals to a glasses apparatus. The glasses apparatus may be configured to open shutter glasses during the first period of high level and close shutter glasses during the second period of low level. The sync signal may be generated in various ways.

The controller 160 controls overall operations of the image display apparatus 100. Specifically, the controller 160 may control each of the signal processor 120, a multiplexer (not shown), the output unit 130, and the interface unit 150 to perform corresponding operations. In particular, the controller 160 may control the output unit 130 to convert a mode and output in accordance with a mode conversion command to operate in one of the first mode and the second mode. The controller may be a microprocessor, an integrated circuit (IC) chip or a Central Processing Unit (CPU) in terms of hardware and includes an operating system (OS) and application in terms of software.

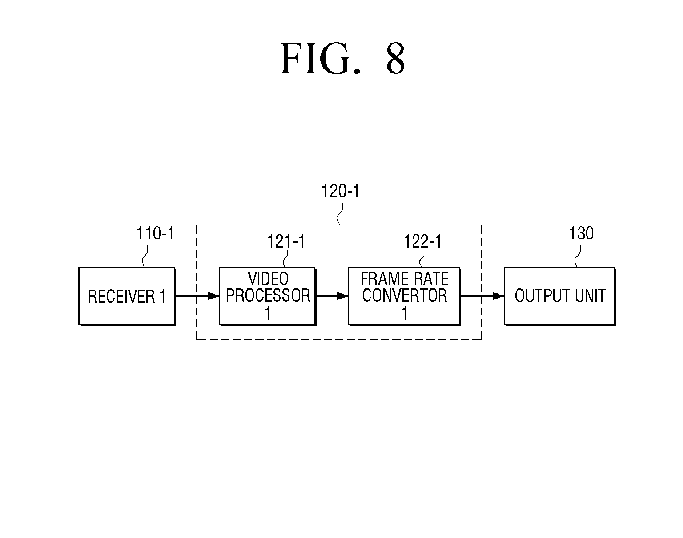

FIGS. 7 and 8 are block diagrams illustrating detailed configuration of the present invention.

First of all, FIG. 7 is a block diagram illustrating configuration of an image display apparatus 100'.

Referring to FIG. 7, the image display apparatus comprises a plurality of receivers 110-1, 110-2, ..., 110-n, a plurality of signal processors 120-1, 120-2, ..., 120-n, the output unit 130, the sync signal generator 140, the interface unit 150, and the controller 160.

As the signal processor 120, the output unit 130, the interface unit 150, and the controller 160 have already been explained above, only the receiver 110 and the sync signal generator 140 will be explained.

Each of the plurality of receivers 110-1, 110-2, ..., 110-n receives different contents. To be specific, each of the plurality of receivers 110-1, 110-2, ..., 110-n receives contents from a broadcasting station which transmits broadcast program contents via a broadcast network or a web server which transmits content files via Internet. Alternatively, the plurality of receivers 110-1, 110-2, ..., 110-n may receive contents from various recording medium reproduction apparatuses which are provided within the image display apparatus 100' or connected to the image display apparatus 100'. The recording medium reproduction apparatus refers to an apparatus which reproduces contents stored in various types of recoding media such as a CD, a DVD, a hard disk, a Blu-ray disk, memory card, a USB memory, and so on.

If contents are received from a broadcasting station, the plurality of receivers 110-1, 110-2, ..., 110-n may be configured to include a tuner (not shown), a demodulator (not shown), an equalizer (not shown), and so on. If contents are received from a source such as a web server, the plurality of receivers 110-1, 110-2, ..., 110-n may be realized as an interface unit (not shown) connected to a recording medium reproduction apparatus. For example, the plurality of receivers 110-1, 110-2, ..., 110-n may be realized as an AV terminal, a COMP terminal, an HDMI terminal, and so on. As such, the plurality of receivers 110-1, 110-2, ..., 110-n may be realized in various forms depending on exemplary embodiments. The plurality of receivers 110-1, 110-2, ..., 110-n do not necessarily receive contents from the same type of source, and may receive contents from different types of sources.

The sync signal generator 140 generates a sync signal which synchronizes each content to a corresponding glasses apparatus in accordance with a display timing of each content.

As it is not necessary to synchronize the glasses apparatus 200 in a 2D single-view mode, a separate sync signal is not required.

However, in a 2D multi-view mode, a sync signal corresponding to the number of contents should be generated and transmitted to each glasses apparatus 200. However, the open/close timings of left-eye shutter glasses and right-eye shutter glasses of each glasses apparatus 200 are the same with each other, each glasses apparatus 200 needs to receive only one sync signal from the image display apparatus 100.

In a 3D single-view mode, two types of sync signals corresponding to the left-eye image frame and the right-eye image frame may be generated. In this case, each glasses apparatus needs to receive two types of sync signals and opens/closes the left-eye shutter glasses and the right-eye shutter glasses in turn according to each signal.

In a 3D multi-view mode, two types of sync signals corresponding to the left-eye image frame and the right-eye image frame of each content. Each glasses apparatus 200 has to receive a sync signal corresponding to the left-eye image frame and the right-eye image frame of contents which are currently viewed, and opens/closes the left-eye shutter glasses and the right-eye shutter glasses in turn according to each signal.

The image display apparatus 100 further includes configuration for providing audio data included in each content different for each content in a 2D multi-view mode or in a 3D multi-view mode. That is, the image display apparatus 100 may further comprise a demultiplexer (not shown) for separating video data and audio data from contents received from each of the plurality of receivers 110-1, 110-2, ..., 110-n, an audio decoder (not shown) for decoding the separated audio data, a modulator (not shown) for modulating each of the decoded audio data to different frequency signals, an output unit (not shown) for transmitting each of the modulated audio data to a glasses apparatus, and so on. Each of the audio data output from the output unit 130 is provided to a user through an output means such as an earphone formed on a glasses apparatus.

If contents include additional information such as Electronic Program Guide (EPG) or subtitles, the additional data may be separated from the contents through a demultiplexer (not shown). The image display apparatus 100 may add, for example, subtitles which are processed to be displayable through an additional data processor (not shown) to a corresponding image frame.

FIG. 8 is block diagram illustrating specific configuration of one of a plurality of signal processors.

Referring to FIG. 8, the signal processor 120-1 may comprise a video processor 121-1 and a frame rate converter 122-1.

The video processor 121-1 may perform signal processing with respect to video data included in received contents. To be specific, the video processor 121-1 may include a decoder (not shown) for decoding video data and a scaler (not shown) for performing up-scaling or down-scaling to fit the screen size of the output unit 130.

In addition, the video processor 121-1 may convert video data to a data format corresponding to the frame rate converter 122-1. For example, the video processor 121-1 may connect image frames of each content side by side to convert video data to a side-by-side format.

The frame rate converter 122-1 converts frame rates of contents provided by the video processor 121-1 to fit a multi-content display rate with reference to the output rate of the image display apparatus 100. To be specific, if the image display apparatus 100 operates in 60 Hz, the frame rate converter 122-1 may convert frame rates of each content to be nx60 Hz.

For example, in the case of full high definition in a 2D single-view mode, the frame rate converter 122-1 may set the image frame rate of contents to be 120 Hz. If image frames of two 2D contents are output alternately in a 2D multi-view mode, the frame rate converter 122-1 may set the image frame rate of the 2D contents to be 240 Hz. Similarly, if the left-eye image frame and the right-eye image frame of one 3D content are output alternately in a 3D single-view mode, the frame rate converter 122-1 may set the image frame rate of the 3D content to be 240 Hz. Since a 3D multi-view mode requires frame output of higher speed, the frame rate converter 122-1 may set the image frame rate of 3D contents to be 480 Hz in case that the left-eye image frame and the right-eye image frame of two 3D contents are output alternately.

Hereinafter, an exemplary embodiment for mode conversion between the first mode and the second mode according to a mode conversion command will be explained with reference to the corresponding drawings.

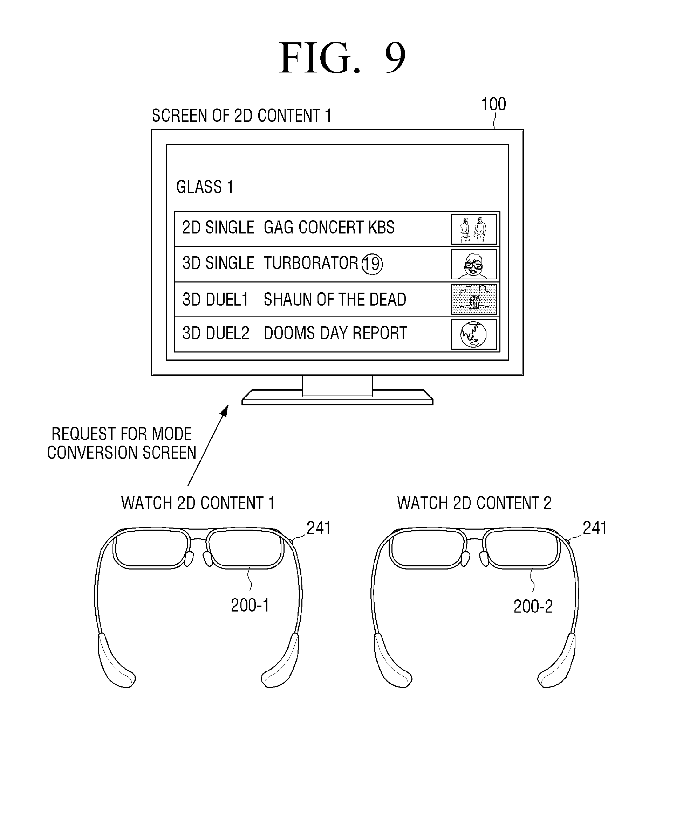

FIG. 9 is a display screen in which a mode conversion command is transmitted according to an exemplary embodiment.

As illustrated in FIG. 9, when a user wishes to change a mode, an On Screen Display (OSD) menu for mode conversion is displayed on a display of the image display apparatus 100. To be specific, a controller may output an OSD menu for mode conversion along with a reduced screen of the first mode and a reduced screen of the second mode.

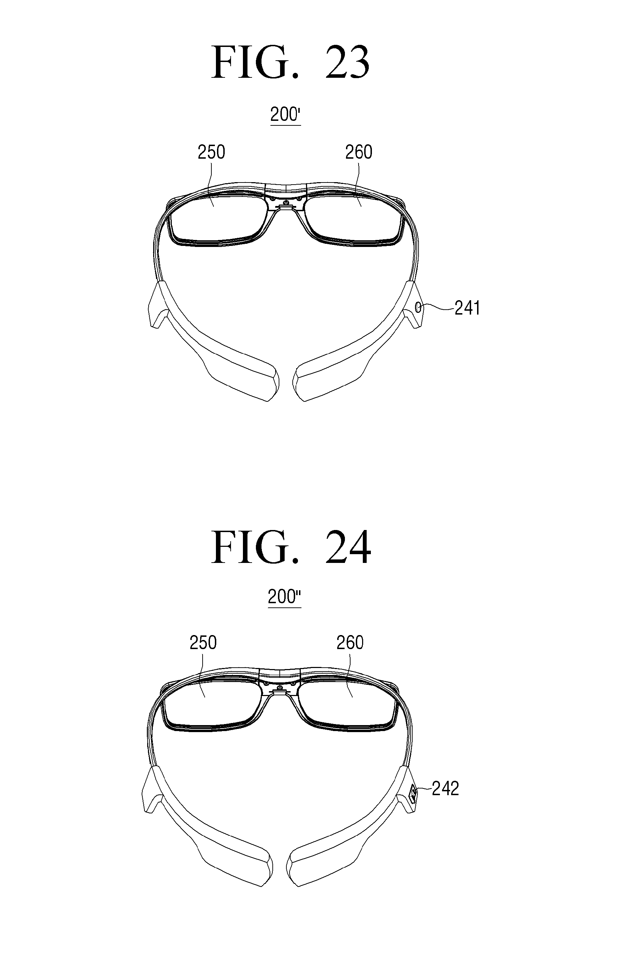

For example, if a user watching content 1 in a 2D multi-view mode wishes to change a mode, the user may transmit a control signal by pressing a button (see 241 in FIG. 23) of the glasses apparatus 200 for a time or pressing a remote control button (not shown) so that a mode conversion screen may be displayed on the display of the image display apparatus 100. The title of a program currently displayed in a 2D single-view, "Gag Concert" is displayed on a display along with its reduced screen or a thumbnail image in the form of menu. In addition, as illustrated in FIG. 9, a menu for informing that "Turborator" is displayed in a 3D single-view mode, "Shaun of the Dead" is displayed in channel 1 of a 3D multi-view, and "Dooms Day Report" is displayed in channel 2 of 3D multi-view. However, in the above exemplary embodiment, such a menu is not displayed in the viewing screen of content 2.

The reason for indicating whether a content mode is a single-view or a multi-view is related to resolution. If a single multi-view process IC is used, a single-view may be processed in resolution which is twice higher than a duel-view (if two contents are received in a multi-view mode). However, it is difficult for a user to recognize the difference in resolution between a single-view and a duel-view in a Full High Definition (FHD) image, such information may be omitted. Accordingly, information regarding whether contents displayed in each channel are a single-view or a multi-view may be omitted, if necessary.

There are various ways to display an OSD menu. For example, the above-mentioned signal processor 129 may compose an image frame by encoding an OSD menu in an image frame of contents. In the above exemplary embodiment, an OSD menu for mode conversion may be encoded together to compose an image frame. The OSD menu is not displayed on a viewing screen of content 2.

In another exemplary embodiment, the image display apparatus 100 may comprise a separate OSD display layer. However, in this case, the OSD menu is not included in an image frame of a specific content, but is synchronized with an image frame of contents with a mode conversion command and is displayed on an OSD display layer at a display timing of the contents. Accordingly, if a user watching content 1 requests for displaying an OSD menu, the OSD menu is not displayed on the display screen of content 2.

A user may select a desired mode, and in this case, a mode conversion command is received through the interface unit 150.

In the above exemplary embodiment, a mode conversion command may be an input to select a mode which is different from the current mode on the OSD menu. In this case, the method for selecting a specific item of the OSD menu may be performed in various ways.

FIG. 9 illustrates an exemplary embodiment in which a menu item representing a 3D duel 1 channel is highlighted. As described above, the OSD menu for mode conversion may be displayed on a display of the image display apparatus 100 if the button 241 of the glasses apparatus 200 is pressed for a time, menu items may be highlighted sequentially as the menu items are toggled on the display if the button is pressed for a short time, and a currently-highlighted menu item may be selected if the button is pressed for a time again.

Alternatively, if the button 241 of the glasses apparatus 200 is pressed, information regarding a screen displayed in another mode may be displayed on the display of the image display apparatus 100 one by one. In this case, whenever the button 241 is pressed, a menu item corresponding to different modes is displayed in turn, and a mode conversion command is transmitted by pressing the button 241 for a time or pressing another button to select a menu item displayed on the screen. In addition, the above-described exemplary embodiment may be performed by pressing a button of a remote controller (not shown) instead of the button 241 of the glasses apparatus 200.

Further, in the above-exemplary embodiment, a scenario of a 2D multi-view has been explained, but the same technical feature may be applied similarly to a 3D single-view and a 3D multi-view.

In the above-exemplary embodiment, a user who is watching another content may be interrupted as a mode is converted without his or her intention. That is, setting the authority of mode conversion may be a problem.

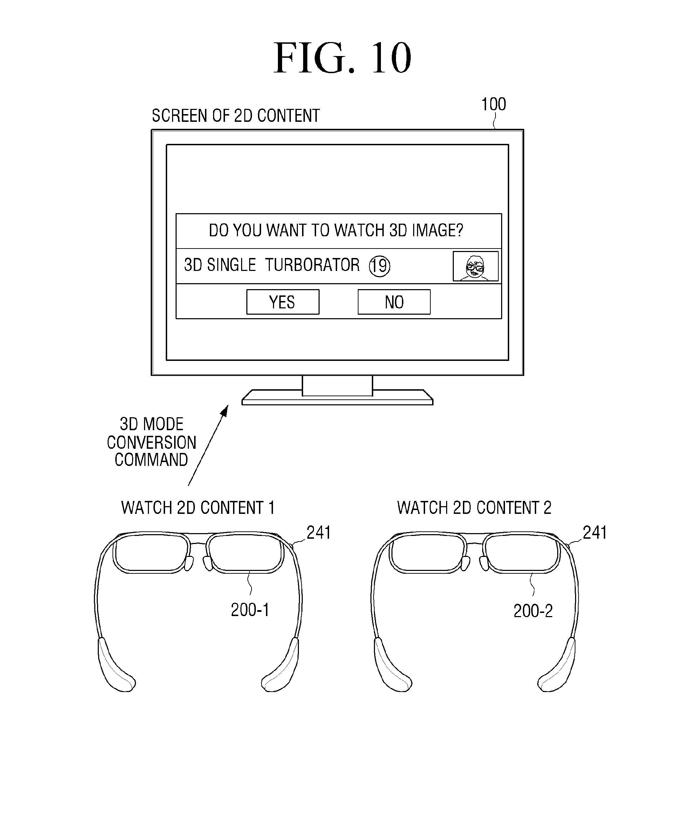

FIGS. 10 to 12 illustrate another exemplary embodiment to resolve the above problem.

Referring to FIGS. 10 to 12, if a mode conversion command is received through the interface unit 150, a controller may control the output unit 130 to output a message asking whether to accept mode conversion. Such a message may be included in an image frame of a specific content and then output, or may be output to an OSD layer at a display timing of a specific content.

In the above-exemplary embodiment, if a glasses apparatus of a viewer of content 1 transmits a mode conversion command, for example, inputs a command to select a 3D single channel, a message asking whether to view a 3D image is displayed on a viewing screen of content 2. In the exemplary embodiment of FIG. 10, information including a reduced image of "Turborator 2" which is being displayed on a 3D single is displayed along with an OSD menu.

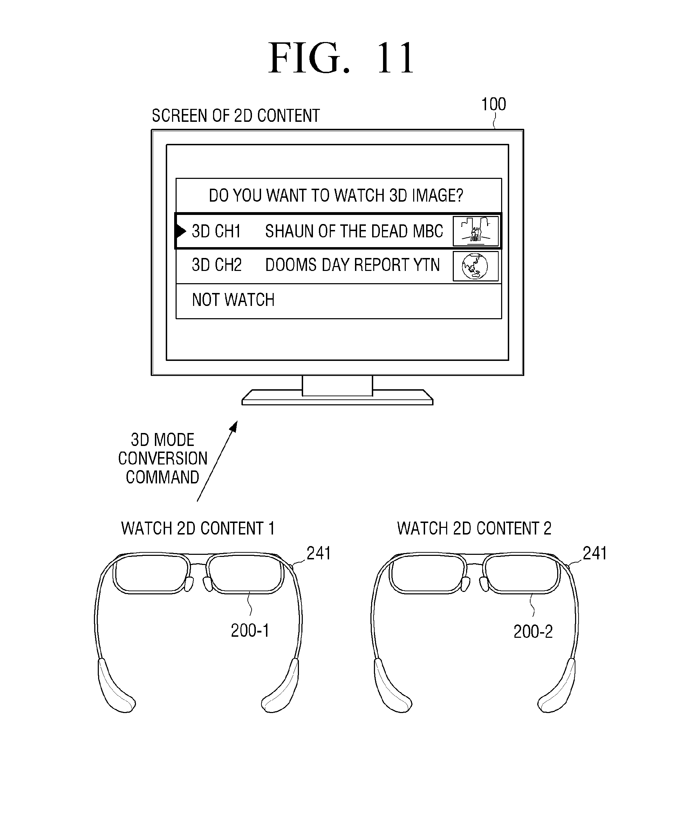

However, if a glasses apparatus of a view of content 1 transmits a mode conversion command to a 3D duel channel, a view of content 2 needs to be able to select a desired 3D content and thus, the image display apparatus 100 may display information regarding a program which is being displayed on each 3D channel along with a corresponding reduced image as illustrated in FIG. 11. A viewer of content 2 presses the button 241 of the glasses apparatus 200 for a short time to toggle and display a 3D channel item or a mode conversion denial item on the display of the image display apparatus 100, and may select a corresponding item by pressing the button 241 again for a time the desired item is highlighted. In this case, an input to select a channel item becomes a mode conversion acceptance message. On the other hand, an input to select a mode conversion denial item becomes a mode conversion denial message.

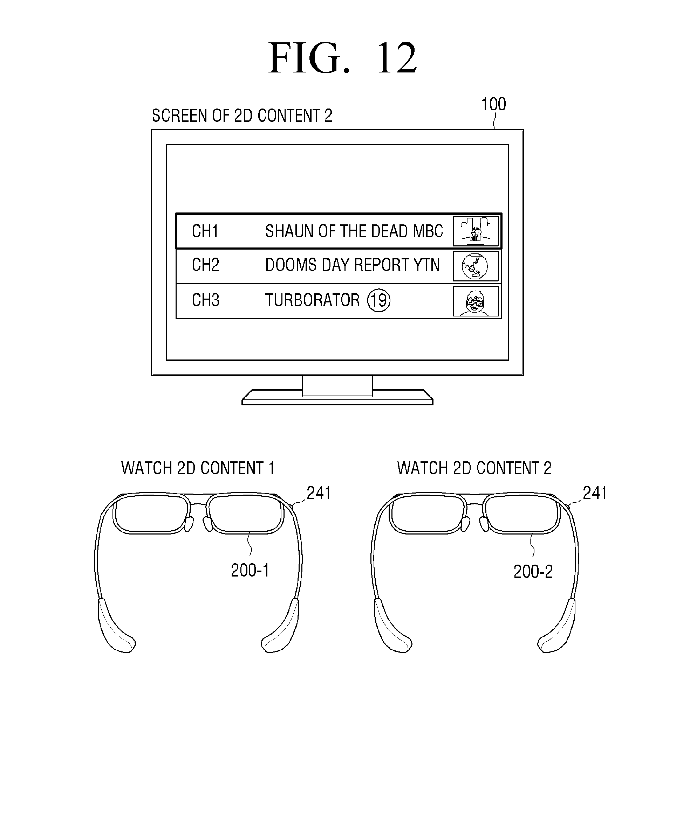

FIG. 12 illustrates an exemplary embodiment in which 3D channel information including both a 3D single-view mode and a 3D multi-view mode are displayed when a mode conversion command is transmitted from the first mode to the second mode. In reality, a user may desire information regarding all of the available 3D contents, and in the case of FIG. 12, even in the case where a mode conversion command transmitted by the glasses apparatus 200 of content 1 is a 3D single-view mode, the glasses apparatus 200 corresponding to content 2 may select 3D content output in a 3D multi-view mode.

In the exemplary embodiment, one content may be viewed through a plurality of glasses apparatuses 200. In this case, setting authority among a plurality of glasses apparatuses may be problem.

One way of resolving the above problem is to set authority differently for each of the glasses apparatuses 200. For example, only one glasses apparatus 200 may be authorized to give a mode conversion command or to transmit a message for acceptance with mode conversion. In this case, the glasses apparatuses which users who are watching the same content as the above glasses apparatus cannot transmit a mode conversion command or transmit a message for acceptance with mode conversion. Accordingly, other glasses apparatuses may be synchronized with the image display apparatus 100 according to mode conversion of the glasses apparatus 200 having the authority. The image display apparatus 100 may set authority of mode conversion differently for each glasses apparatus, if necessary.

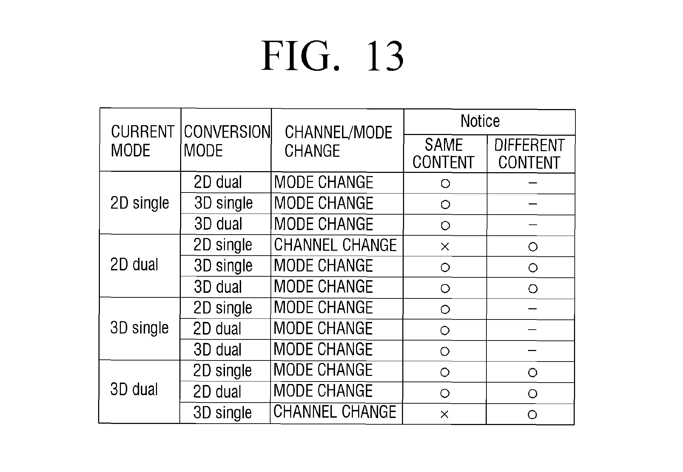

FIG. 13 is a reference table indicating whether it is necessary to display a message for asking whether to accept mode conversion according to characteristics of a current mode and a converted mode. If there are a plurality of users watching the same contents, it is necessary to ask each user whether to accept mode conversion. For example, if a mode is changed from a 2D single-view mode to a 2D duel-view mode, resolution of image frames of contents may be deteriorated as mentioned above. Therefore, a message asking for whether to accept mode conversion should be transferred to other glasses apparatuses which are paired with the same contents. In this case, the mode conversion may represent channel change. However, as other contents are not output since the current mode is a single-view mode, it is not necessary to ask other glasses apparatuses than the above-mentioned glasses apparatuses about the mode conversion. On the other hand, if a 2D duel-view mode is changed to a 3D duel-view mode, viewing modes of every user are changed and thus, every user watching a plurality of contents should be asked for mode conversion. However, if a 2D duel-view mode is changed to a 2D single-view mode, there is no influence on users watching other contents, so it is not necessary to ask those users about mode conversion.

However, FIG. 13 is only an example, and a message asking whether to accept mode conversion may be displayed on a screen that every user is watching in other exemplary embodiments. For example, for a user who is watching contents in a 2D duel-view mode to reduce eye fatigue by watching low-resolution screen, the above-mentioned mode conversion message may be displayed.

Further, if a mode conversion command is received from the remote controller 300, the controller 160 may control the output unit 130 to change mode and perform outputting without outputting a message asking whether to accept the mode conversion. As such, the operations of the image display apparatus 100 may be controlled effectively by setting the signal of the remote controller 300 to have the highest authority.

An exemplary embodiment of setting a viewing embodiment will be described below.

As mentioned above, the image display apparatus 100 has various output modes. Therefore, if one user sets a viewing environment, it may affect other users' viewing environments. Accordingly, an appropriate control means is required.

Herein, the viewing environment represents factors which determine a display environment of contents such as screen mode, backlight, depth, brightness, contrast, resolution, sharpness, black tone, location and size of subtitles, master volume, equalizer information (amplifying level for each balance and frequency band), SRS TruSurround HD, sharpness, and black tone information.

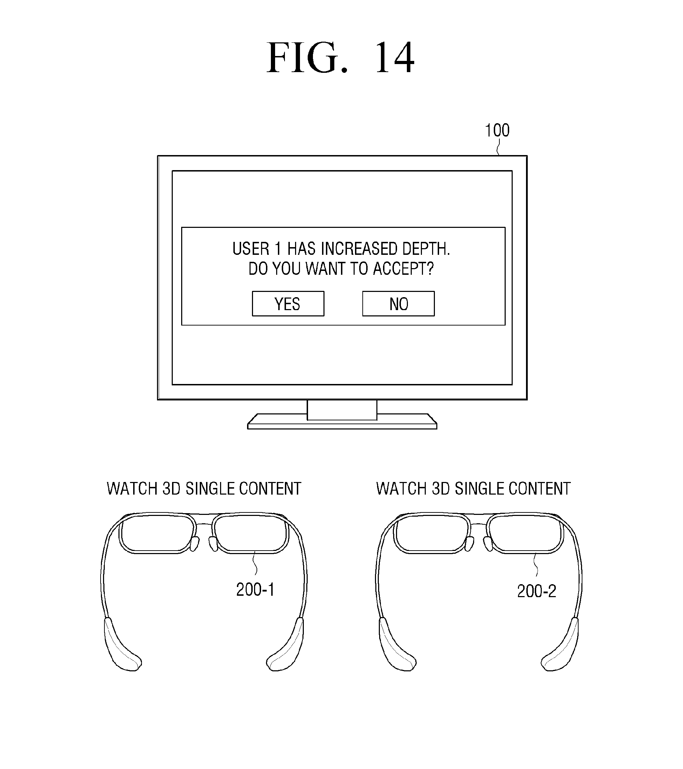

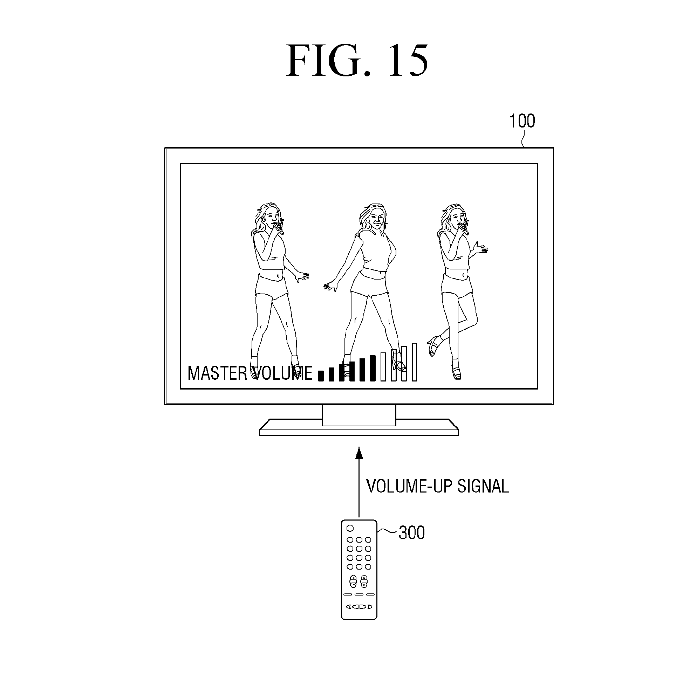

FIGS. 14 and 15 are reference views illustrating an operation of the image display apparatus 100 when a viewing environment setting command is received.

Referring to FIG. 14, if a viewing environment setting command is received through the interface unit 150, the controller 160 displays a message asking whether to accept a viewing environment setting on a display, and if a message for accepting a viewing environment setting is received through the interface unit 150, a viewing environment is set in accordance with the viewing environment setting command to output image frames of 2D contents or 3D contents.

The viewing environment setting command may be transmitted to the image display apparatus 100 through the glasses apparatus 200 or the remote controller 300 just like the mode conversion command which has been described above.

For example, if one user transmits a command to increase depth to the image display apparatus 100 through a remote controller (not shown) or the glasses apparatus 200, the image display apparatus 100 may display a message asking whether to accept it on a display. The setting of viewing environment may be a problem if there are a plurality of viewers watching the same contents. However, if one user transmits a command to increase depth to the image display apparatus 100 through a remote controller or a glasses apparatus in a 3D multi-view mode in which a plurality of contents are provided, increasing depth of 3D contents which are viewed currently does not affect other 3D contents and thus, it is not necessary to display the above message on the display screens of other contents.

However, if such a command affects all users regardless of contents, a message should be displayed on the display screens of all contents. For example, if a command to set a master volume of the image display apparatus 100 is transmitted, the output volume of the image display apparatus 100 varies depending on the master volume. Therefore, it is necessary for other users to accept the execution of the command.

FIG. 15 is a reference view provided to explain the operation of the image display apparatus 100 when a viewing environment setting command is received from the remote controller 300.

As illustrated in FIG. 15, if a viewing environment setting command is received from the remote controller 300, the controller may control not to output a message asking whether to accept a viewing environment setting, but to set a viewing environment and perform outputting. As such, since the highest authority is be set to a signal of the remote controller 300 and thus, the operation of the image display apparatus 100 may be controlled effectively.

Hereinafter, a method for displaying an image according to another exemplary embodiment will be explained with reference to a corresponding drawing.

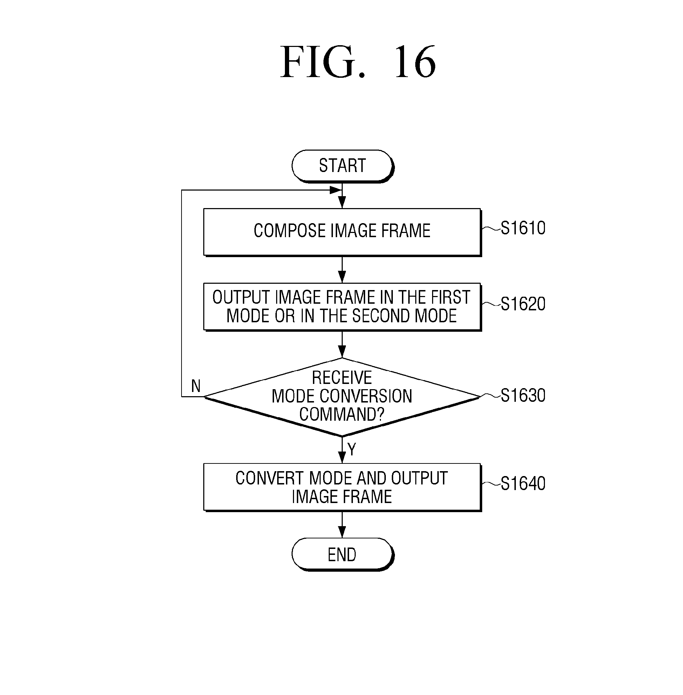

FIGS. 16 to 21 are flowcharts illustrating an image display method according to another exemplary embodiment.

Referring to FIG. 16, an image display method according to another exemplary embodiment may comprise composing an image frame of 2D content or 3D content (S1610), outputting the image frame of 2D content or 3D content in the first mode for displaying image frames of 2D contents or in the second mode for displaying image frames of 3D contents (S1620), and if a mode conversion command to operate in one of the first mode and the second mode is received (S1630-Y), performing mode conversion and outputting image frames of 2D contents or 3D contents according to the received mode conversion command (S1640).

Since each step has been explained above, overlapping description will not be provided.

As described above, the first mode may be one of a 2D single-view mode for outputting image frames of one 2D content sequentially and a 2D multi-view mode for outputting images of a plurality of 2D contents alternatively.

The second mode may be one of a 3D single-view mode for outputting a left-eye image frame and a right-eye image frame of one 3D content alternately and a 3D multi-view mode for outputting a left-eye image frame and a right-eye image frame of each of a plurality of 3D contents alternately.

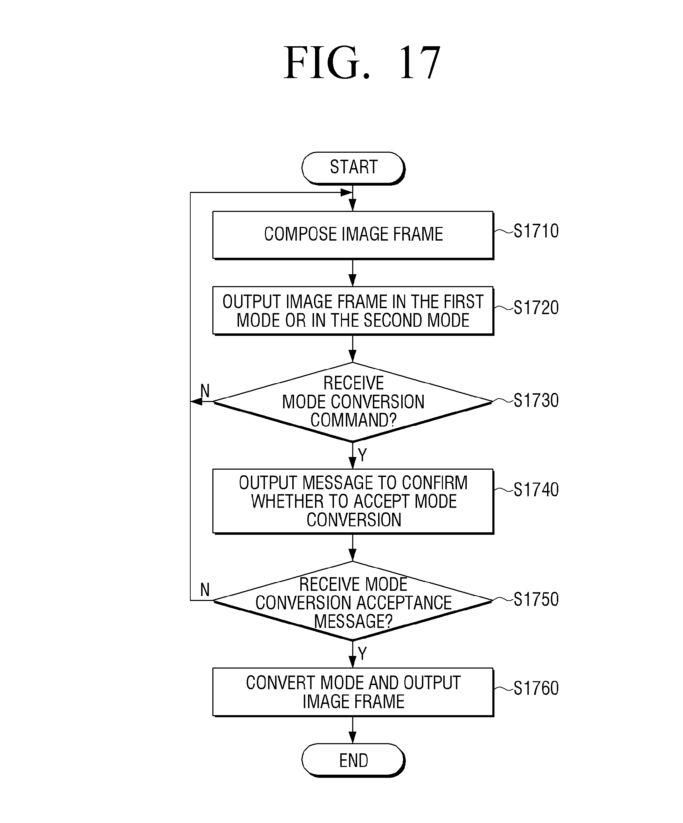

Referring to FIG. 17, an image display method according to another exemplary embodiment may comprise composing an image frame of 2D content or 3D content (S1710), outputting the image frame of 2D content or 3D content in the first mode for displaying image frames of 2D contents or in the second mode for displaying image frames of 3D contents (S1720), if a mode conversion command to operate in one of the first mode and the second mode is received (S1730-Y), outputting a message asking for whether to accept mode conversion (S1740), and if a mode conversion acceptance message is received (S1750-Y), performing mode conversion and outputting image frames of 2D contents or 3D contents (S1760).

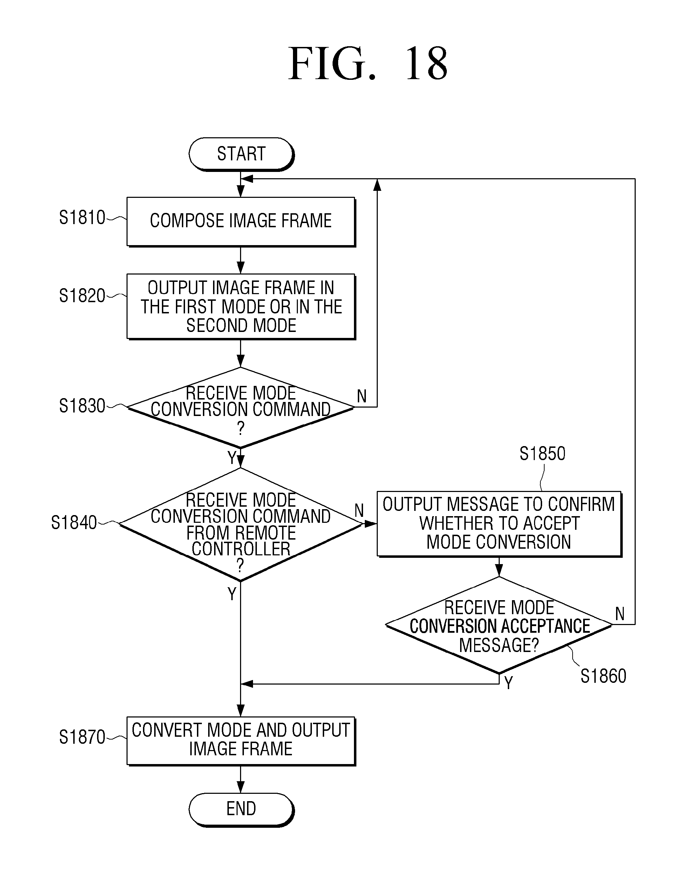

Referring to FIG. 18, an image display method according to another exemplary embodiment may comprise composing an image frame of 2D content or 3D content (S1810), outputting the image frame of 2D content or 3D content in the first mode for displaying image frames of 2D contents or in the second mode for displaying image frames of 3D contents (S1820), and if a mode conversion command to operate in one of the first mode and the second mode is received (S1830-Y) and a mode conversion command is received from the remote controller 300 (S1840-Y), performing mode conversion to output the image frame of the 2D content or the 3D content without outputting a message asking whether to accept the mode conversion (S1870). However, if a mode conversion acceptance message is received from other apparatuses than the remote controller 300, for example, from a glasses apparatus (S1840-N), a message asking whether to accept the mode conversion is output (S1850), and if a mode conversion acceptance message is received (S1860-Y), mode conversion is performed to output the image frame of the 2D content or the 3D content (S1870).

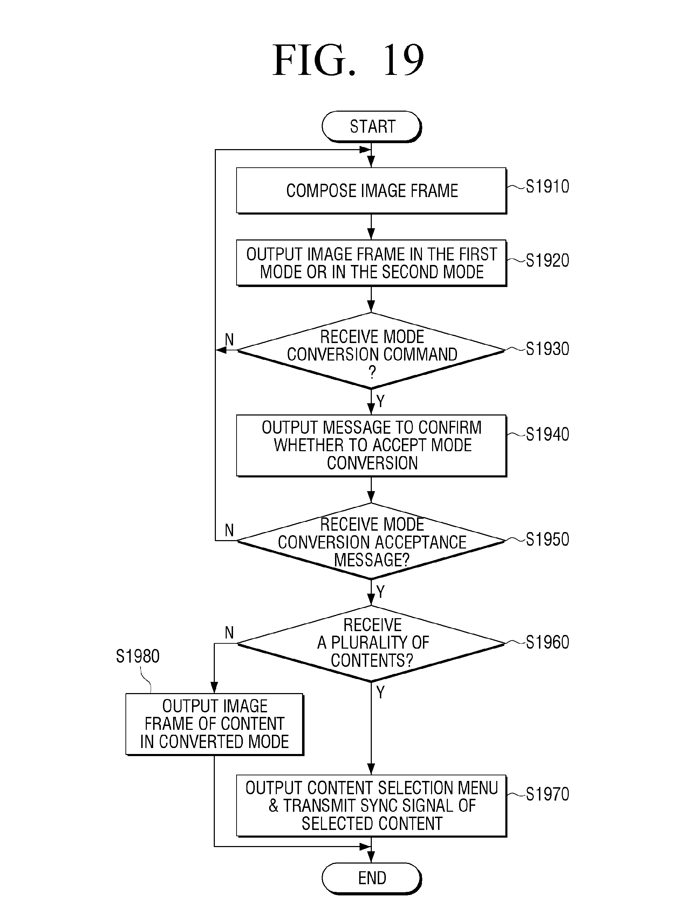

Referring to FIG. 19, an image display method according to another exemplary embodiment may further comprise, if mode conversion is performed in the exemplary embodiment in FIG. 18 and a plurality of contents are received in the converted mode (S1960-Y), outputting a menu to select one of the plurality of contents and transmitting a sync signal corresponding to the content selected from the content to the glasses apparatus which transmits the mode conversion command (S1970).

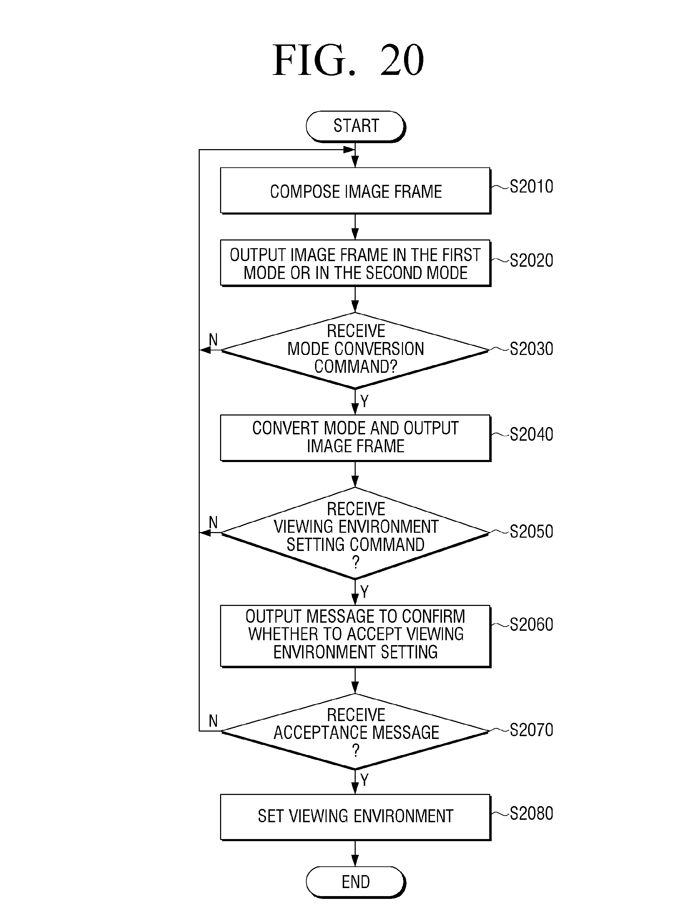

Further, referring to FIG. 20, an image display method according to another exemplary embodiment may comprise, if a viewing environment setting command is received in FIG. 16 (S2050-Y), outputting a message asking whether to accept a viewing environment setting (S2060), and if a viewing environment setting acceptance message is received (S2070-Y), setting a viewing environment in accordance with the viewing environment setting command to output the image frame of 2D content or 3D content (S2080).

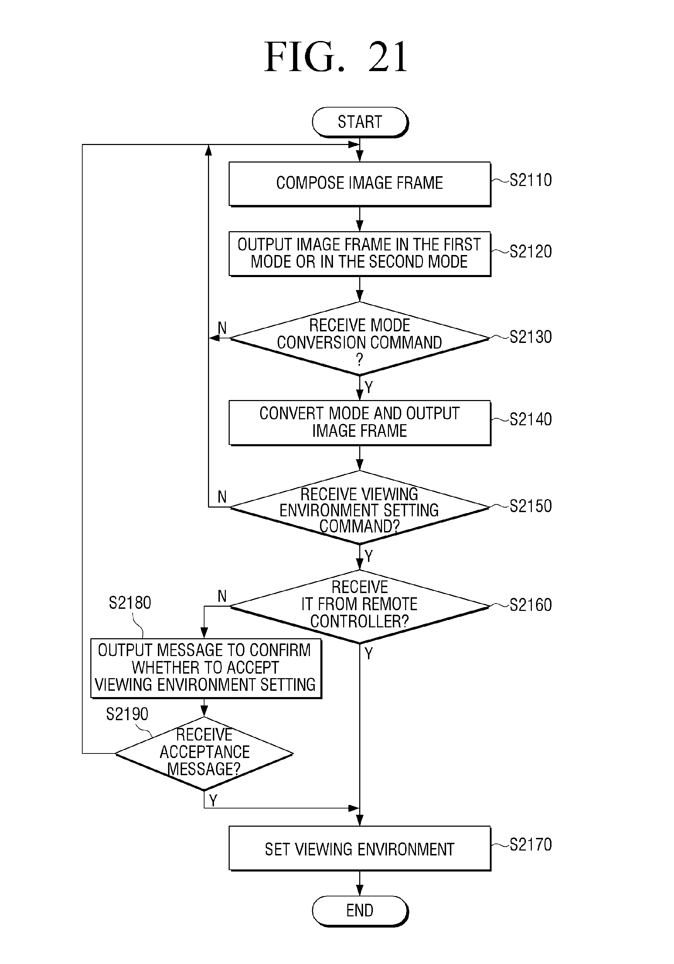

Further, referring to FIG. 21, in the exemplary embodiment in FIG. 20, if a viewing environment setting command is received from the remote controller 300 (S2160-Y), a message asking whether to accept a viewing environment setting may not be output and instead, a viewing environment may be set in accordance with the viewing environment setting command to output the image frame of 2D content or 3D content (S2070).

A program to perform the various exemplary embodiments may be stored in various types of recording media for use.

To be specific, a code to perform the above-mentioned methods may be stored in various types of recording media which are readable in a terminal, such as Random Access Memory (RAM), flash memory, Read Only Memory (ROM), Erasable Programmable ROM (EPROM), Electronically, Erasable and Programmable ROM (EEPROM), register, hard disk, removable disk, memory card, USB memory, CD-ROM, and so on.

Hereinafter, a configuration of the glasses apparatus 200 according to various exemplary embodiments will be explained.

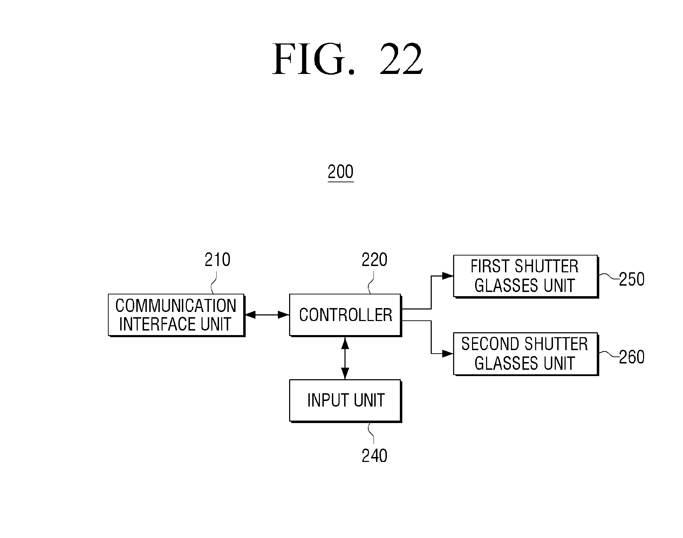

FIG. 22 is a block diagram illustrating configuration of the glasses apparatus 200 according to various exemplary embodiments.

FIGS. 23 and 24 are reference views illustrating an exemplary embodiment of the glasses apparatus 200 including various input units 240.

Referring to FIG. 22, the glasses apparatus 200 is interlocked with the image display apparatus 100 which displays a plurality of contents alternately by image frame unit and comprises a communication interface unit 210, a controller 220, a first shutter glasses unit 250, a second shutter glasses unit 260, and an input unit 240.

The communication interface unit 210 communicates with the image display apparatus 100 and receives a sync signal.

For example, if the communication interface unit 210 is realized as a Bluetooth communication module, a transmission stream including a sync signal may be received by performing communication with the image display apparatus 100 according to Bluetooth communication standard. In this case, the transmission stream is synchronized with a display timing of image frames of each content to include time information to open or close the first shutter glasses unit 250 and the second shutter glasses unit 260 of the glasses apparatus 200, and the glasses apparatus 200 may open or close shutter glasses in accordance with a display timing of the image frame of content corresponding to the glasses apparatus.

Alternatively, the communication interface unit 210 may be realized as an IR reception module to receive a sync signal in the form of infrared rays with a specific frequency. In this case, the communication interface unit 210 includes time information to open or close the first shutter glasses unit 250 and the second shutter glasses unit 260 of the glasses apparatus 200 to synchronize with a display timing of the image frame of the content.

The communication interface unit 210 may receive information regarding the image frame rate and the image frame period of each content from the image display apparatus 100.

The controller 220 controls overall operations of the glasses apparatus 200.

The controller 220 controls operations of the shutter glasses driving unit 230 by transmitting a sync signal received from the interface unit 210 to the shutter glasses driving unit 230. That is, the controller 220 controls to generate a driving signal to drive the first shutter glasses unit 250 and the second shutter glasses unit 260 based on the sync signal.

In this case, the glasses apparatus 200 may further include a shutter glasses driving unit (not shown) to drive the first shutter glasses and the second shutter glasses.

The shutter glasses driving unit (not shown) generates a driving signal based on the sync signal received from the controller 220. In particular, the shutter glasses driving unit (not shown) may open the first shutter glasses unit 250 and the second shutter glasses unit 260 in accordance with a display timing of the image frame of 2D content or 3D content which is displayed on the image display apparatus 100.

The first shutter glasses unit 250 and the second shutter glasses unit 260 may open or close shutter glasses in accordance with a driving signal received from the shutter glasses driving unit (not shown). In the case of a 2D multi-view content, the first shutter glasses unit 250 and the second shutter glasses unit 260 are opened or closed simultaneously.

On the other hand, in the case of 3D content, the first shutter glasses unit 250 and the second shutter glasses unit 260 are opened or closed alternately. That is, in accordance with a driving signal, the first shutter glasses unit 250 may be opened at a time when a left-eye image frame constituting 3D contents is displayed, and the second shutter glasses unit 260 may be opened at a time when a right-eye image frame is displayed.

The first shutter glasses unit 250 and the second shutter glasses unit 260 may include a liquid crystal cell. The orientation of the liquid crystal cell is switched in accordance with a driving voltage, and the liquid crystal cell blocks or transmits light in accordance with the switched orientation. For example, the shutter glasses driving unit (not shown) of the glasses apparatus 200 applies voltage to the first shutter glasses unit at a time when a left-eye image frame of 3D content is displayed in a 3D single-view mode, and transmits light as the liquid crystal cell is oriented by the applied voltage. On the other hand, the shutter glasses driving unit (not shown) of the glasses apparatus 200 does not apply voltage to the second glasses unit, and the liquid crystal cell is dispersed, scattering or covering light. The reverse operation is performed when a right-eye image frame of 3D content is displayed.

The input unit 240 receives a user command and may transmit a mode conversion command or a viewing environment setting command.

FIG. 23 illustrates a glasses apparatus 200' including the button 241 which has been mentioned above. As illustrated in FIG. 23, if there is only one button 241, a mode conversion screen or a viewing environment setting screen may be displayed on the display of the image display apparatus 100 by pressing the button 241 for a time. If the button 241 is pressed for a short time after the menu is displayed, a menu item may be toggled so that an item to be selected is highlighted and displayed on the display of the image display apparatus 100, and the corresponding item may be selected by pressing the highlighted button 241 for a time again.

FIG. 24 illustrates a glasses apparatus 200" having a switch 242 according to another exemplary embodiment. As the switch 242 is manipulated, mode conversion may be performed and in this case, there is no need to display a separate menu screen, thereby improving user convenience in manipulation.

According to the exemplary embodiment, the image display apparatus 100 may provide a plurality of users with 2D content or 3D content according to the above-mentioned 2D single-view mode, 2D multi-view mode, 3D single-view mode and 3D multi-view mode so that a user may watch a desired content by performing mode conversion. In this case, if mode conversion affects other users, a message asking whether to accept the mode conversion is displayed to apply the mode conversion differently and thus, a plurality of users may watch various contents more conveniently.

The foregoing embodiments and advantages are merely exemplary and are not to be construed as limiting the inventive concept. The present teachings can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An image display apparatus comprising:
a signal processing unit which composes an image frame of two-dimensional (2D) content or three-dimensional (3D) content;
an output unit which operates to output the 2D content in a first mode in which an image frame of the 2D content output from the signal processing unit is displayed or output the 3D content in a second mode in which an image frame of the 3D content output from the signal processing unit is displayed;
an interface unit which receives a mode conversion command; and
a control unit which controls the output unit to convert between operating in the first mode and the second mode in accordance with the mode conversion command received by the interface unit.

2. The image display apparatus as claimed in claim 1, wherein the first mode is one of a 2D single-view mode in which image frames of one 2D content are output sequentially and a 2D multi-view mode in which image frames of a plurality of 2D contents are output alternately.

3. The image display apparatus as claimed in claim 1, wherein the second mode is one of a 3D single-view mode in which a left-eye image frame and a right-eye image frame of one 3D content are output alternately and a 3D multi-view mode in which a left-eye image frame and a right-eye image frame of each of a plurality of 3D contents at output alternately.

4. The image display apparatus as claimed in claim 1, wherein the control unit controls the output unit to output an On Screen Display (OSD) menu for mode conversion along with a reduced screen of the first mode and a reduced screen of the second mode,
wherein the mode conversion command is an input to select another mode on the menu which is different from the current mode.

5. The image display apparatus as claimed in claim 1, wherein if the mode conversion command is received through the interface unit, the control unit controls to output a message asking whether to accept mode conversion, and if a mode conversion acceptance message is received through the interface unit, controls the output unit to convert to one of the first mode and the second mode in accordance with the mode conversion command.

6. The image display apparatus as claimed in claim 1, wherein if the mode conversion command is received from a remote controller, the control unit controls the output unit to convert to one of the first mode and the second mode in accordance with the mode conversion command without outputting a message asking whether to accept mode conversion.

7. The image display apparatus as claimed in claim 5 or claim 6, wherein if the mode conversion is performed and a plurality of contents are received, the control unit controls the output unit to output a menu to select one of the plurality of contents and controls the interface unit to transmit a sync signal corresponding to a content selected from a menu to a glasses apparatus which transmits the mode conversion command.

8. The image display apparatus as claimed in claim 1, wherein if a viewing environment setting command is received through the interface unit, the control unit controls the output unit to output a message asking whether to accept a viewing environment setting, and if a viewing environment setting acceptance message is received through the interface unit, the control unit controls the output unit to output the image frame of the 2D content or the 3D content by setting a viewing environment in accordance with the viewing environment setting command.

9. The image display apparatus as claimed in claim 8, wherein if the viewing environment setting command is received from a remote controller, the control unit controls the output unit to output the image frames of the 2D content or the 3D content by setting a viewing environment in accordance with the viewing environment setting command without outputting a message asking whether to accept the viewing environment setting.

10. The image display apparatus as claimed in claim 8 or claim 9, wherein the viewing environment is at least one of depth, brightness, contrast, resolution, and master volume.

11. A method for displaying an image, comprising:
composing an image frame of two-dimensional (2D) content or three-dimensional (3D) content;
outputting the 2D content in a first mode in which the image frame of the 2D content is displayed or outputting the 3D content in a second mode in which the image frame of the 3D content output is displayed;
receiving a mode conversion command to operate in one of the first mode and the second mode; and
converting between outputting the image frames of the 2D content in the first mode and outputting the image frames of the 3D content in the second mode in accordance with the received mode conversion command.

12. The method as claimed in claim 11, wherein the first mode is one of a 2D single-view mode in which image frames of one 2D content are output sequentially and a 2D multi-view mode in which image frames of a plurality of 2D contents are output alternately.

13. The method as claimed in claim 11, wherein the second mode is one of a 3D single-view mode in which a left-eye image frame and a right-eye image frame of one 3D content are output alternately and a 3D multi-view mode in which a left-eye image frame and a right-eye image frame of each of a plurality of 3D contents at output alternately.

14. The method as claimed in claim 11, further comprising:
if the mode conversion command is received, outputting a message asking whether to accept mode conversion,
wherein the converting comprises if a mode conversion acceptance message is received, converting between outputting the image frames of the 2D content in the first mode and outputting the image frames of the 3D content in the second mode in accordance with the received mode conversion.

15. The method as claimed in claim 14, wherein if the mode conversion command is received from a remote controller, the converting comprises if the mode conversion command is received from a remote controller, converting between outputting the image frames of the 2D content in the first mode and outputting the image frames of the 3D content in the second mode in accordance with the received mode conversion command without outputting the message asking whether to accept the mode conversion.
